# EUROPEAN PATENT APPLICATION

(11) **EP 1 119 129 A2**
(43) Date of publication of application: **25.07.2001**
(21) Application number: 00311628.2
(22) Date of filing: 22.12.2000
(51) Int. Cl.: H04L 9/00

(54) **Method and apparatus for decrypting contents information**

(30) Priority: 19.01.2000 JP 2000009901; 23.02.2000 JP 2000045843
(71) Applicant: Victor Company of Japan, Ltd., Yokohama 221-0022 (JP)
(72) Inventor: Sugahara, Takayuki, Yokosuka-shi, Kanagawa-ken (JP); Kuroiwa, Toshio, Yokosuka-shi, Kanagawa-ken (JP); Inoha, Wataru, Yokosuka-shi, Kanagawa-ken (JP); Ueda, Kenjiro, Yokosuka-shi, Kanagawa-ken (JP); Higurashi, Seiji, Fuchu-shi, Tokyo (JP)
(74) Representative: Dempster, Benjamin John Naftel

(57) **Abstract**

A first-key signal representative of a first key is generated from first-key base information being a base of the first key. Contents information is encrypted into encryption-resultant contents information in response to the first-key signal. A second-key signal representative of a second key is generated from second-key base information being a base of the second key. The first-key base information is encrypted into encryption-resultant first-key base information in response to the second-key signal. Second-key-related information is generated from the second-key base information and additional information according to a predetermined function. The encryption-resultant contents information, the encryption-resultant first-key base information, and the second-key-related information are transmitted or recorded.

## Description

This invention relates to a method of decrypting contents information. Also, this invention relates to an apparatus for decrypting contents information. In addition, this invention relates to a method of transmitting contents information. Furthermore, this invention relates to a method of recording contents information. Also, this invention relates to an apparatus for transmitting contents information. In addition, this invention relates to an apparatus for recording contents information. Furthermore, this invention relates to a transmission medium. Also, this invention relates to a recording medium.

Japanese published unexamined patent application 10-269289 discloses a system for managing the distribution of digital contents. In the system of Japanese application 10-269289, a distributor side encrypts and compresses digital contents into processing-resultant digital contents. The distributor side transmits the processing-resultant digital contents, an encryption-resultant contents key, and encryption-resultant accounting information to a communication opposite party. The distributor side implements a process of receiving a charge on the basis of contents use information transmitted from the communication opposite party. Then, the distributor side implements a process of dividing the received charge among interested persons including a copyright holder of the digital contents. On the other hand, a user side (a digital contents player) decrypts and expands the processing-resultant digital contents in response to the contents key, thereby reproducing the original digital contents. The user side subjects the accounting information to a reducing process responsive to the use of the digital contents. The user side transmits the reduced accounting information and the contents use information to the distributor side.

Japanese published unexamined patent application 10-283268 discloses a system in which a recording medium stores encryption-resultant main information, and also encryption-resultant information representing a key for decrypting the encryption-resultant main information. Non-encrypted information representing conditions of decrypting the encryption-resultant main information is added to the encryption-resultant key information. In more detail, the encryption-resultant key information has non-encrypted control information which contains device information and region information. The control information is designed to prevent the encryption-resultant main information from being copied onto a magnetic recording medium or an optical disc in a user side for illegal use thereof.

The system of Japanese application 10-283268 has a problem as follows. The non-encrypted control information in the encryption-resultant key information can easily be altered by a third person. The alteration of the non-encrypted control information enables the third person to illegally copy the encryption-resultant main information.

It is a first object of this invention to provide an improved method of decrypting contents information.

It is a second object of this invention to provide an improved apparatus for decrypting contents information.

It is a third object of this invention to provide an improved method of transmitting contents information.

It is a fourth object of this invention to provide an improved method of recording contents information.

It is a fifth object of this invention to provide an improved apparatus for transmitting contents information.

It is a sixth object of this invention to provide an improved apparatus for recording contents information.

It is a seventh object of this invention to provide an improved transmission medium.

It is an eighth object of this invention to provide an improved recording medium.

A first aspect of this invention provides a method of decrypting encryption-resultant contents information generated by an encrypting side which implements the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting the first-key base information into encryption-resultant first-key base information in response to the second-key signal; and generating second-key-related information from the second-key base information and additional information according to a predetermined function. The method comprises the steps of reproducing second-key base information from second-key-related information and additional information according to an inverse function with respect to the predetermined function; generating a second-key signal representative of a second key from the reproduced second-key base information; decrypting encryption-resultant first-key base information into original first-key base information in response to the second-key signal; generating a first-key signal representative of a first key from the original first-key base information; and decrypting encryption-resultant contents information into original contents information in response to the first-key signal.

A second aspect of this invention provides an apparatus for decrypting encryption-resultant contents information generated by an encrypting side which implements the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting the first-key base information into encryption-resultant first-key base information in response to the second-key signal; and generating second-key-related information from the second-key base information and additional information according to a predetermined function. The apparatus comprises means for reproducing second-key base information from second-key-related information and additional information according to an inverse function with respect to the predetermined function; means for generating a second-key signal representative of a second key from the reproduced second-key base information; means for decrypting encryption-resultant first-key base information into original first-key base information in response to the second-key signal; means for generating a first-key signal representative of a first key from the original first-key base information; and means for decrypting encryption-resultant contents information into original contents information in response to the first-key signal.

A third aspect of this invention is based on the first aspect thereof, and provides a method wherein the additional information contains at least one of 1) an information piece about a region or regions corresponding to one or more countries, one or more zones, or one or more spaces, 2) an information piece about identification of an individual, 3) an information piece about identification of a group of persons, 4) an information piece about a rating, 5) an information piece about identification of an apparatus maker or a device maker, 6) an information piece about identification of a contents provider, 7) an information piece about time, 8) an information piece about contents authors, 9) an information piece about identification of a reproducing apparatus or a reproducing device, 10) an information piece about identification of a connection apparatus or a connection device, 11) an information piece about identification of a medium on which contents information is recorded, 12) an information piece about identification of contents information, and 13) an information piece about accounting.

A fourth aspect of this invention provides a method of decrypting encryption-resultant contents information generated by an encrypting side which implements the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting a part of the first-key base information in response to the second-key signal to convert the first-key base information into encryption-resultant first-key base information; and generating second-key-related information from the second-key base information and additional information according to a predetermined function. The method comprises the steps of reproducing second-key base information from second-key-related information and additional information according to an inverse function with respect to the predetermined function; generating a second-key signal representative of a second key from the reproduced second-key base information; decrypting encryption-resultant first-key base information into original first-key base information in response to the second-key signal; generating a first-key signal representative of a first key from the original first-key base information; and decrypting encryption-resultant contents information into original contents information in response to the first-key signal.

A fifth aspect of this invention provides an apparatus for decrypting encryption-resultant contents information generated by an encrypting side which implements the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting a part of the first-key base information in response to the second-key signal to convert the first-key base information into encryption-resultant first-key base information; and generating second-key-related information from the second-key base information and additional information according to a predetermined function. The apparatus comprises means for reproducing second-key base information from second-key-related information and additional information according to an inverse function with respect to the predetermined function; means for generating a second-key signal representative of a second key from the reproduced second-key base information; means for decrypting encryption-resultant first-key base information into original first-key base information in response to the second-key signal; means for generating a first-key signal representative of a first key from the original first-key base information; and means for decrypting encryption-resultant contents information into original contents information in response to the first-key signal.

A sixth aspect of this invention is based on the fourth aspect thereof, and provides a method wherein the additional information contains at least one of 1) an information piece about a region or regions corresponding to one or more countries, one or more zones, or one or more spaces, 2) an information piece about identification of an individual, 3) an information piece about identification of a group of persons, 4) an information piece about a rating, 5) an information piece about identification of an apparatus maker or a device maker, 6) an information piece about identification of a contents provider, 7) an information piece about time, 8) an information piece about contents authors, 9) an information piece about identification of a reproducing apparatus or a reproducing device, 10) an information piece about identification of a connection apparatus or a connection device, 11) an information piece about identification of a medium on which contents information is recorded, 12) an information piece about identification of contents information, and 13) an information piece about accounting.

A seventh aspect of this invention provides a method of transmitting contents information. The method comprises the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting the first-key base information into encryption-resultant first-key base information in response to the second-key signal; generating second-key-related information from the second-key base information and additional information according to a predetermined function; and transmitting the encryption-resultant contents information, the encryption-resultant first-key base information, and the second-key-related information.

An eighth aspect of this invention provides a method of recording contents information. The method comprises the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting the first-key base information into encryption-resultant first-key base information in response to the second-key signal; generating second-key-related information from the second-key base information and additional information according to a predetermined function; and recording the encryption-resultant contents information, the encryption-resultant first-key base information, and the second-key-related information.

A ninth aspect of this invention provides an apparatus for transmitting contents information. The apparatus comprises means for generating a first-key signal representative of a first key from first-key base information being a base of the first key; means for encrypting contents information into encryption-resultant contents information in response to the first-key signal; means for generating a second-key signal representative of a second key from second-key base information being a base of the second key; means for encrypting the first-key base information into encryption-resultant first-key base information in response to the second-key signal; means for generating second-key-related information from the second-key base information and additional information according to a predetermined function; and means for transmitting the encryption-resultant contents information, the encryption-resultant first-key base information, and the second-key-related information.

A tenth aspect of this invention provides an apparatus for recording contents information. The apparatus comprises means for generating a first-key signal representative of a first key from first-key base information being a base of the first key; means for encrypting contents information into encryption-resultant contents information in response to the first-key signal; means for generating a second-key signal representative of a second key from second-key base information being a base of the second key; means for encrypting the first-key base information into encryption-resultant first-key base information in response to the second-key signal; means for generating second-key-related information from the second-key base information and additional information according to a predetermined function; and means for recording the encryption-resultant contents information, the encryption-resultant first-key base information, and the second-key-related information.

An eleventh aspect of this invention provides a transmission medium for transmitting encryption-resultant contents information, encryption-resultant first-key base information, and second-key-related information which are generated by the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting the first-key base information into encryption-resultant first-key base information in response to the second-key signal; and generating second-key-related information from the second-key base information and additional information according to a predetermined function.

A twelfth aspect of this invention provides a recording medium loaded with encryption-resultant contents information, encryption-resultant first-key base information, and second-key-related information which are generated by the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting the first-key base information into encryption-resultant first-key base information in response to the second-key signal; and generating second-key-related information from the second-key base information and additional information according to a predetermined function.

A thirteenth aspect of this invention is based on the seventh aspect thereof, and provides a method wherein the additional information contains at least one of 1) an information piece about a region or regions corresponding to one or more countries, one or more zones, or one or more spaces, 2) an information piece about identification of an individual, 3) an information piece about identification of a group of persons, 4) an information piece about a rating, 5) an information piece about identification of an apparatus maker or a device maker, 6) an information piece about identification of a contents provider, 7) an information piece about time, 8) an information piece about contents authors, 9) an information piece about identification of a reproducing apparatus or a reproducing device, 10) an information piece about identification of a connection apparatus or a connection device, 11) an information piece about identification of a medium on which contents information is recorded, 12) an information piece about identification of contents information, and 13) an information piece about accounting.

A fourteenth aspect of this invention provides a method of transmitting contents information. The method comprises the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting a part of the first-key base information in response to the second-key signal to convert the first-key base information into encryption-resultant first-key base information; generating second-key-related information from the second-key base information and additional information according to a predetermined function; and transmitting the encryption-resultant contents information, the encryption-resultant first-key base information, and the second-key-related information.

A fifteenth aspect of this invention provides a method of recording contents information. The method comprises the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting a part of the first-key base information in response to the second-key signal to convert the first-key base information into encryption-resultant first-key base information; generating second-key-related information from the second-key base information and additional information according to a predetermined function; and recording the encryption-resultant contents information, the encryption-resultant first-key base information, and the second-key-related information.

A sixteenth aspect of this invention provides an apparatus for transmitting contents information. The apparatus comprises means for generating a first-key signal representative of a first key from first-key base information being a base of the first key; means for encrypting contents information into encryption-resultant contents information in response to the first-key signal; means for generating a second-key signal representative of a second key from second-key base information being a base of the second key; means for encrypting a part of the first-key base information in response to the second-key signal to convert the first-key base information into encryption-resultant first-key base information; means for generating second-key-related information from the second-key base information and additional information according to a predetermined function; and means for transmitting the encryption-resultant contents information, the encryption-resultant first-key base information, and the second-key-related information.

A seventeenth aspect of this invention provides an apparatus for recording contents information. The apparatus comprises means for generating a first-key signal representative of a first key from first-key base information being a base of the first key; means for encrypting contents information into encryption-resultant contents information in response to the first-key signal; means for generating a second-key signal representative of a second key from second-key base information being a base of the second key; means for encrypting a part of the first-key base information in response to the second-key signal to convert the first-key base information into encryption-resultant first-key base information; means for generating second-key-related information from the second-key base information and additional information according to a predetermined function; and means for recording the encryption-resultant contents information, the encryption-resultant first-key base information, and the second-key-related information.

An eighteenth aspect of this invention provides a transmission medium for transmitting encryption-resultant contents information, encryption-resultant first-key base information, and second-key-related information which are generated by the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting a part of the first-key base information in response to the second-key signal to convert the first-key base information into encryption-resultant first-key base information; and generating second-key-related information from the second-key base information and additional information according to a predetermined function.

A nineteenth aspect of this invention provides a recording medium loaded with encryption-resultant contents information, encryption-resultant first-key base information, and second-key-related information which are generated by the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting a part of the first-key base information in response to the second-key signal to convert the first-key base information into encryption-resultant first-key base information; and generating second-key-related information from the second-key base information and additional information according to a predetermined function.

A twentieth aspect of this invention is based on the fourteenth aspect thereof, and provides a method wherein the additional information contains at least one of 1) an information piece about a region or regions corresponding to one or more countries, one or more zones, or one or more spaces, 2) an information piece about identification of an individual, 3) an information piece about identification of a group of persons, 4) an information piece about a rating, 5) an information piece about identification of an apparatus maker or a device maker, 6) an information piece about identification of a contents provider, 7) an information piece about time, 8) an information piece about contents authors, 9) an information piece about identification of a reproducing apparatus or a reproducing device, 10) an information piece about identification of a connection apparatus or a connection device, 11) an information piece about identification of a medium on which contents information is recorded, 12) an information piece about identification of contents information, and 13) an information piece about accounting.

Fig. 1 is a block diagram of a system for contents information according to an embodiment of this invention.

Fig. 2 is a diagram of a calculator in a primary section in Fig. 1.

There now follows a description of the preferred embodiment.

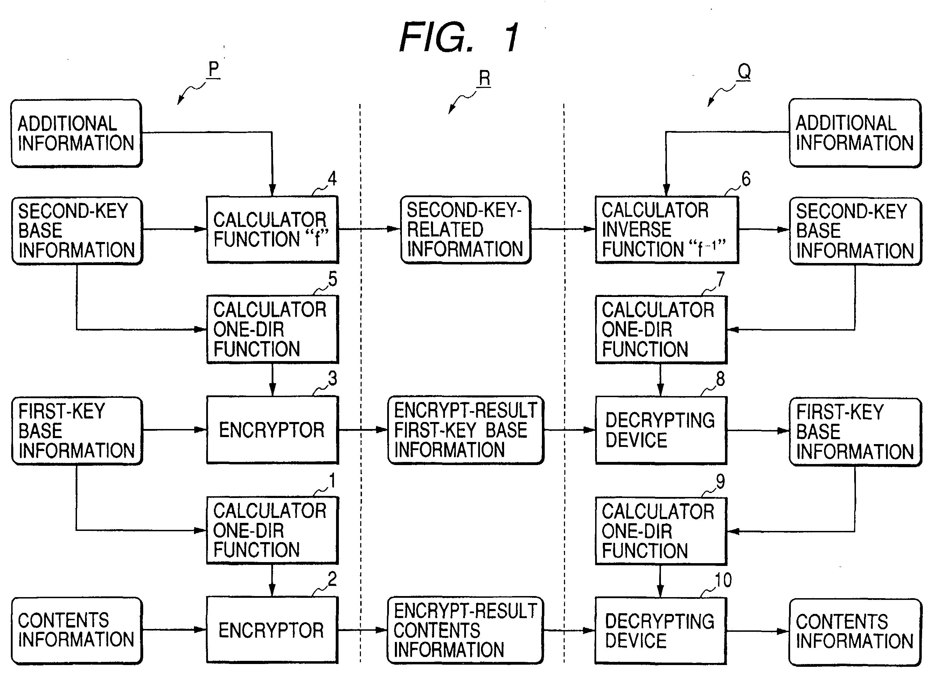

Fig. 1 shows a system for contents information according to an embodiment of this invention. With reference to Fig. 1, the system includes a primary section P, a secondary section Q, and an intermediate section R. The primary section P and the secondary section Q are connected to each other via the intermediate section R.

The primary section P includes an information recording apparatus or an information transmitting apparatus. The secondary section Q includes an information reproducing apparatus or an information receiving apparatus. An example of the information reproducing apparatus is an information player. The intermediate section R includes a recording medium or a transmission medium. Examples of the recording medium are a magnetic recording medium, an optical recording medium, and a semiconductor memory. Examples of the transmission medium are an optical fiber cable, electric wires, and a radio transmission line. The transmission medium is also referred to as a transmission line.

The primary section P includes a calculator 1 which receives information being a base of a first key. The first-key base information is fed from a suitable device (not shown). The calculator 1 generates a signal (data) representative of the first key from the first-key base information according to a predetermined one-directional function. The calculator 1 outputs the first-key signal (the first-key data) to an encryptor 2.

The encryptor 2 receives contents information from a suitable device (not shown). The device 2 encrypts the received contents information into encryption-resultant contents information in response to the first-key signal. The encryptor 2 outputs the encryption-resultant contents information to the intermediate section R.

Specifically, the primary section P records the encryption-resultant contents information on the recording medium of the intermediate section R, or transmits the encryption-resultant contents information to the transmission line of the intermediate section R.

The one-directional function is a one-directional hash function. The one-directional function means a function "h" designed to meet conditions as follows. When a certain value "x" is given in a domain of definition, it is difficult to calculate a value "y" which satisfies the relation as "h(x) = h(y)".

The encryptor 2 may additionally include a compressor. In this case, the compressor compresses the contents information, and then the encryptor 2 encrypts the compression-resultant contents information. The compression of the contents information is executed in a predetermined compressing method such as an MPEG (Moving Picture Experts Group) compressing method. The encryption of the compression-resultant contents information is executed in an encrypting method such as DES (Data Encryption Standard).

According to DES, contents information is encrypted and decrypted 64 bits by 64 bits in response to a common key represented by a 56-bit signal.

It should be noted that compression-resultant contents information may be fed to the encryptor 2 from an external device (not shown). In this case, the compressor is omitted from the encryptor 2.

The encryption by the encryptor 2 includes a step of dividing every 64-bit block of the contents information (or the compression-resultant contents information) into a pair of 32-bit sub blocks. The encryption includes additional steps for signal processing on a sub-block by sub-block basis. The additional steps contain a step of transposing data, a step of executing permutation of data, a step of processing data according to a nonlinear function, and a step of executing Exclusive-OR operation between data.

In the case of DES, an encrypting key is represented by data having 56 bits. Accordingly, specified 56-bit information peculiar to the primary section P (or the system) is set as first-key base information, that is, information being a base of a first key corresponding to a one-directional function having an output bit number of 56.

In the case where the contents of the one-directional function are open to the public and the first-key base information is required to be recorded on the recording medium of the intermediate section R or be outputted to the transmission line of the intermediate section R, it is preferable that the first-key base information is encrypted before being recorded on the recording medium or being outputted to the transmission line.

The primary section P includes a calculator 5 which receives information being a base of a second key different from the first key. The second key may be equal to the first key. The second-key base information is fed from a suitable device (not shown). The calculator 5 generates a signal (data) representative of the second key from the second-key base information according to a predetermined one-directional function. Preferably, the one-directional function used by the calculator 5 differs from that used by the calculator 1. The one-directional function used by the calculator 5 may be the same as that used by the calculator 1. The calculator 5 outputs the second-key signal (the second-key data) to an encryptor 3.

The encryptor 3 receives the first-key base information. The device 3 encrypts the first-key base information into encryption-resultant first-key base information in response to the second-key signal. The encryptor 3 outputs the encryption-resultant first-key base information to the intermediate section R.

Specifically, the primary section P records the encryption-resultant first-key base information on the recording medium of the intermediate section R, or transmits the encryption-resultant first-key base information to the transmission line of the intermediate section R.

The encryptor 3 may encrypt a part of the first-key base information in response to the second-key signal. For example, the device 3 encrypts only an important portion of the first-key base information. Alternatively, the device 3 may encrypt the whole of the first-key base information.

The primary section P includes a calculator 4 which receives additional information (auxiliary information or ancillary information) from a suitable device (not shown). The calculator 4 also receives the second-key base information. The calculator 4 generates second-key-related information from the additional information and the second-key base information according to a predetermined function "f'. The calculator 4 outputs the second-key-related information to the intermediate section R.

Specifically, the primary section P records the second-key-related information on the recording medium of the intermediate section R, or transmits the second-key-related information to the transmission line of the intermediate section R.

Preferably, the second-key base information differs from the first-key base information. In this case, specified 56-bit information peculiar to the primary section P (or the system) which differs from the specified 56-bit information for the first key is set as the second-key base information.

As previously indicated, the additional information is used by the calculator 4. The additional information is common to the primary section P and the secondary section Q. Thus, the additional information is owned by both the primary section P and the secondary section Q. For example, the additional information contains at least one of 1) an information piece about a region or regions corresponding to one or more countries, one or more zones, or one or more spaces, 2) an information piece about identification (ID) of an individual, 3) an information piece about identification of a group of persons, 4) an information piece about a rating, 5) an information piece about identification of an apparatus maker or a device maker, 6) an information piece about identification of a contents provider, 7) an information piece about time (a playback allowable term), 8) an information piece about contents authors, 9) an information piece about identification of a reproducing apparatus or a reproducing device (a player), 10) an information piece about identification of a connection apparatus or a connection device, 11) an information piece about identification of a medium on which contents information is recorded, 12) an information piece about identification of contents information, and 13) an information piece about accounting.

In the case where additional information owned by the secondary section Q differs from that owned by the primary section P, it is difficult for the secondary section Q to reproduce second-key base information from received second-key-related information. Therefore, in this case, it is also difficult for the secondary section Q to decrypt received encryption-resultant first-key base information and received encryption-resultant contents information.

The encryption-resultant contents information, the encryption-resultant first-key base information, and the second-key-related information are transmitted from the primary section P to the secondary section Q through the intermediate section R.

The secondary section Q includes a calculator 6 which receives additional information (auxiliary information or ancillary information) from a suitable device (not shown). Only in the case where the secondary section Q is owned by a legitimate user, the additional information used by the calculator 6 is equal to that used by the calculator 4 in the primary section P. The calculator 6 also receives the second-key-related information from the intermediate section R. In the case where the additional information used by the secondary section Q is equal to that used by the primary section P, the calculator 6 successfully reproduces the second-key base information from the second-key-related information and the additional information according to an inverse function "f⁻¹" with respect to the predetermined function "f". On the other hand, in the case where the additional information used by the secondary section Q differs from that used by the primary section P, the calculator 6 fails to reproduce the second-key base information. The calculator 6 outputs the reproduced second-key base information to a calculator 7.

The calculator 7 generates a signal (data) representative of the second key from the second-key base information according to a predetermined one-directional function equal to that used by the calculator 5 in the primary section P. The calculator 7 outputs the second-key signal (the second-key data) to a decrypting device 8.

The decrypting device 8 receives the encryption-resultant first-key base information from the intermediate section R. The decrypting device 8 decrypts the encryption-resultant first-key base information into the first-key base information in response to the second-key signal. The decrypting device 8 outputs the first-key base information to a calculator 9.

The calculator 9 generates a signal (data) representative of the first key from the first-key base information according to a predetermined one-directional function equal to that used by the calculator 1 in the primary section P. The calculator 9 outputs the first-key signal (the first-key data) to a decrypting device 10.

The decrypting device 10 receives the encryption-resultant contents information from the intermediate section R. The decrypting device 10 decrypts the encryption-resultant contents information into the original contents information in response to the first-key signal. Thus, the decrypting device 10 reproduces the original contents information. The decrypting device 10 outputs the reproduced contents information.

As previously mentioned, in the case where the additional information owned by the secondary section Q differs from that owned by the primary section P, it is difficult for the secondary section Q to reproduce the second-key base information from the received second-key-related information. Therefore, in this case, it is also difficult for the secondary section Q to decrypt the received encryption-resultant first-key base information and the received encryption-resultant contents information. Accordingly, illegal reproduction and illegal playback of the contents information can be reliably prevented.

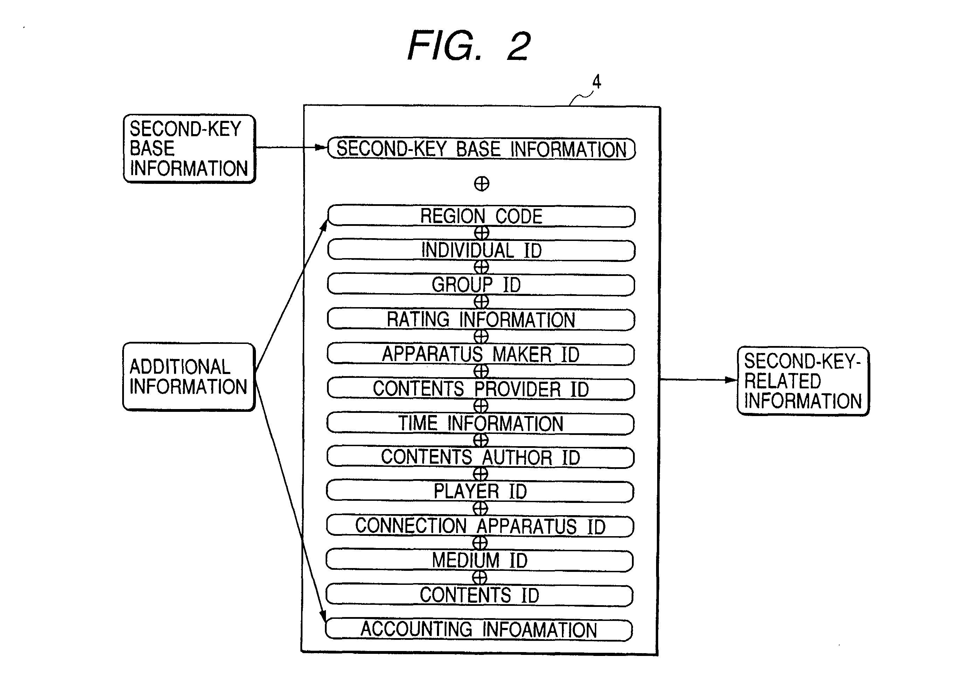

Fig. 2 shows an example of the calculator 4 in the primary section P. With reference to Fig. 2, the calculator 4 in the primary section P receives the second-key base information and the additional information. The second-key base information has, for example, 56 bits. The second-key base information is peculiar to the primary section P (or the system). For example, the additional information contains 1) an information piece about a designated region or regions corresponding to one or more countries, one or more zones, or one or more spaces, 2) an information piece about identification (ID) of an individual, 3) an information piece about identification of a group of persons, 4) an information piece about rating, 5) an information piece about identification of an apparatus maker or a device maker, 6) an information piece about identification of a contents provider, 7) an information piece about time (a playback allowable term), 8) an information piece about contents authors, 9) an information piece about identification of a reproducing apparatus or a reproducing device (a player), 10) an information piece about identification of a connection apparatus or a connection device, 11) an information piece about identification of a medium on which contents information is recorded, 12) an information piece about identification of contents information, and 13) an information piece about accounting. The calculator 4 executes Exclusive-OR operation among the second-key base information and the information pieces 1)-13) in the additional information, thereby generating the second-key-related information. Here, Exclusive-OR operation corresponds to the predetermined function "f". Preferably, the second-key base information and the information pieces 1)-13) in the additional information have the same number of bits, for example, 56 bits.

The calculator 4 may execute Exclusive-OR operation between the second-key base information and the additional information. The calculator 4 may execute Exclusive-OR operation between the second-key base information and at least one of the information pieces 1)-13) in the additional information.

Only in the case where the secondary section Q is legitimate, the additional information in the secondary section Q is equal to that in the primary section P. In the secondary section Q, the additional information is automatically fed to the calculator 6, or is fed thereto via a machine interface (not shown). The calculator 6 executes Exclusive-OR operation among the second-key-related information and the information pieces 1)-13) in the additional information, thereby reproducing the second-key base information. Here, Exclusive-OR operation corresponds to the inverse function "f⁻¹".

Both the predetermined function "f" and its inverse function "f⁻¹" correspond to same logic operation, that is, Exclusive-OR operation. Both the predetermined function "f" and its inverse function "f⁻¹" may correspond to same logic operation other than Exclusive-OR operation. Alternatively, the predetermined function "f" and its inverse function "f⁻¹" may correspond to first logic operation and second logic operation respectively which differ from each other.

The second-key base information, the second-key-related information, and the information pieces 1)-13) in the additional information have the same number of bits, for example, 56 bits. In the case where each of the second-key base information, the second-key-related information, and the information pieces 1)-13) has less than 56 bits, bits of "0" are added thereto as higher bits to complete 56-bit information. Each of the second-key base information, the second-key-related information, and the information pieces 1)-13) may have more than 56 bits. In this case, higher bits corresponding to a surplus over 56 bits are neglected.

The region information piece, that is, the information piece 1), in the additional information concerns a region or regions corresponding to one or more countries, one or more zones, or one or more spaces. Preferably, the region information piece represents designated one or ones of regions. Examples of regions are as follows. According to a first example, the word is divided into three regions using an NTSC television system, a PAL television system, and a SECAM television system respectively. According to a second example, the world is divided into six regions. According to a third example, the word is divided into regions corresponding to the respective countries. Each country-corresponding region may be divided into smaller regions corresponding to respective districts. In view of playback or reproduction of contents information within airplanes, spaces in the airplanes may be set as regions.

The individual ID information piece, that is, the information piece 2), in the additional information represents, for example, a secret number known by only a related individual. According to a second example, the individual ID information piece represents an ID number preassigned to a related individual. According to a third example, the individual ID information piece represents a secret number or a registered number of a credit card. According to a fourth example, the individual ID information piece represents an information number generated on the basis of a physical character of a related individual. The physical character means a fingerprint, an iris pattern, or a DNA.

The group ID information piece, that is, the information piece 3), in the additional information represents, for example, an ID number of a related family. According to a second example, the group ID information piece represents an ID number of a related party. According to a third example, the group ID information piece represents an ID number of a related club or a related team. According to a fourth example, the group ID information piece represents an ID number of a group of residents in a building such as a condominium or an apartment house.

The rating information piece, that is, the information piece 4), in the additional information represents, for example, a number indicative of a level of violence scenes or sexual scenes. According to a second example, the rating information piece represents a number indicative of a level of a right to watch violence scenes or sexual scenes. According to a third example, the rating information piece represents a number calculated from the age of a person who will play back contents information.

Different ID code words are preassigned to apparatus makers (device makers), respectively. The apparatus maker ID information piece, that is, the information piece 5), in the additional information represents an ID code word of a related apparatus maker. Each apparatus maker's name, for example, JVC-VICTOR, may be translated into an ASCII code word. In this case, 56 higher bits of the ASCII code word are used as the apparatus maker ID information piece.

Different ID code words are preassigned to movie makers for providing contents information, respectively. The contents provider ID information piece, that is, the information piece 6), in the additional information represents an ID code word of a related movie maker. Each movie maker's name may be translated into an ASCII code word. In this case, 56 higher bits of the ASCII code word are used as the contents provider ID information piece.

The time information piece, that is, the information piece 7), in the additional information piece represents, for example, a playback allowable time limit or a recording date. Year, month, day, and time may be converted into numerals. In this case, the time information piece is generated by assigning "0" to numerals less than a reference value, and assigning "1" to numerals equal to or greater than the reference value.

The contents author information piece, that is, the information piece 8), in the additional information represents, for example, an ID number of a person who records and edits contents information. The contents author information piece represents ID numbers of persons who edit and process contents information, or an ID number of a company which edits and processes contents information in the case of making a package of previously-recorded contents information.

Serial numbers are given to players (reproducing apparatuses or reproducing devices), respectively. The reproducing apparatus ID information piece, that is, the information piece 9), in the additional information represents, for example, a serial number of a related player.

The connection apparatus ID information piece, that is, the information piece 10), in the additional information represents, for example, a number selected from among a serial number and a type-related number of a communication-opposite-party apparatus which is connected with the present apparatus when mutual authentication is executed therebetween.

Different ID code words are previously recorded on media, respectively. The ID code words may represent ID numbers peculiar to the media, respectively. Alteratively, the ID code words may represent serial numbers assigned to the media, respectively. The medium ID information piece, that is, the information piece 11), in the additional information represents, for example, an ID code word of a used medium.

Different ID code words are preassigned to contents (for example, movies or music tunes) respectively. The contents ID information piece, that is, the information piece 12), in the additional information represents, for example, an ID code word of one content.

The accounting information piece, that is, the information piece 13), in the additional information represents, for example, an ID number of a program about which accounting is normally executed. According to a second example, the accounting information piece represents an ID number of an individual or a family normally executing accounting. Only in the case where accounting is executed, a specified secrete number may be issued. In this case, data representative of the specified secret number may be used as the accounting information piece.

In the above-mentioned embodiment of this invention, the hierarchy of encryption has 2 layers. The hierarchy of encryption may have N layers, where N denotes a predetermined natural number different from 2 or a predetermined natural number greater than 2. In the case where the hierarchy of encryption has N layers, the embodiment of this invention may be applied to any 2 layers among the N layers.

## Claims

1. A method of decrypting encryption-resultant contents information generated by an encrypting side which implements the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting the first-key base information into encryption-resultant first-key base information in response to the second-key signal; and generating second-key-related information from the second-key base information and additional information according to a predetermined function; the method comprising the steps of:
reproducing second-key base information from second-key-related information and additional information according to an inverse function with respect to the predetermined function;
generating a second-key signal representative of a second key from the reproduced second-key base information;
decrypting encryption-resultant first-key base information into original first-key base information in response to the second-key signal;
generating a first-key signal representative of a first key from the original first-key base information; and
decrypting encryption-resultant contents information into original contents information in response to the first-key signal.

2. An apparatus for decrypting encryption-resultant contents information generated by an encrypting side which implements the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting the first-key base information into encryption-resultant first-key base information in response to the second-key signal; and generating second-key-related information from the second-key base information and additional information according to a predetermined function; the apparatus comprising:
means for reproducing second-key base information from second-key-related information and additional information according to an inverse function with respect to the predetermined function;
means for generating a second-key signal representative of a second key from the reproduced second-key base information;
means for decrypting encryption-resultant first-key base information into original first-key base information in response to the second-key signal;
means for generating a first-key signal representative of a first key from the original first-key base information; and
means for decrypting encryption-resultant contents information into original contents information in response to the first-key signal.

3. A method as recited in claim 1, wherein the additional information contains at least one of 1) an information piece about a region or regions corresponding to one or more countries, one or more zones, or one or more spaces, 2) an information piece about identification of an individual, 3) an information piece about identification of a group of persons, 4) an information piece about a rating, 5) an information piece about identification of an apparatus maker or a device maker, 6) an information piece about identification of a contents provider, 7) an information piece about time, 8) an information piece about contents authors, 9) an information piece about identification of a reproducing apparatus or a reproducing device, 10) an information piece about identification of a connection apparatus or a connection device, 11) an information piece about identification of a medium on which contents information is recorded, 12) an information piece about identification of contents information, and 13) an information piece about accounting.

4. A method of decrypting encryption-resultant contents information generated by an encrypting side which implements the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting a part of the first-key base information in response to the second-key signal to convert the first-key base information into encryption-resultant first-key base information; and generating second-key-related information from the second-key base information and additional information according to a predetermined function; the method comprising the steps of:
reproducing second-key base information from second-key-related information and additional information according to an inverse function with respect to the predetermined function;
generating a second-key signal representative of a second key from the reproduced second-key base information;
decrypting encryption-resultant first-key base information into original first-key base information in response to the second-key signal;
generating a first-key signal representative of a first key from the original first-key base information; and
decrypting encryption-resultant contents information into original contents information in response to the first-key signal.

5. An apparatus for decrypting encryption-resultant contents information generated by an encrypting side which implements the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting a part of the first-key base information in response to the second-key signal to convert the first-key base information into encryption-resultant first-key base information; and generating second-key-related information from the second-key base information and additional information according to a predetermined function; the apparatus comprising:
means for reproducing second-key base information from second-key-related information and additional information according to an inverse function with respect to the predetermined function;
means for generating a second-key signal representative of a second key from the reproduced second-key base information;
means for decrypting encryption-resultant first-key base information into original first-key base information in response to the second-key signal;
means for generating a first-key signal representative of a first key from the original first-key base information; and
means for decrypting encryption-resultant contents information into original contents information in response to the first-key signal.

6. A method as recited in claim 4, wherein the additional information contains at least one of 1) an information piece about a region or regions corresponding to one or more countries, one or more zones, or one or more spaces, 2) an information piece about identification of an individual, 3) an information piece about identification of a group of persons, 4) an information piece about a rating, 5) an information piece about identification of an apparatus maker or a device maker, 6) an information piece about identification of a contents provider, 7) an information piece about time, 8) an information piece about contents authors, 9) an information piece about identification of a reproducing apparatus or a reproducing device, 10) an information piece about identification of a connection apparatus or a connection device, 11) an information piece about identification of a medium on which contents information is recorded, 12) an information piece about identification of contents information, and 13) an information piece about accounting.

7. A method of transmitting contents information, comprising the steps of:
generating a first-key signal representative of a first key from first-key base information being a base of the first key;
encrypting contents information into encryption-resultant contents information in response to the first-key signal;
generating a second-key signal representative of a second key from second-key base information being a base of the second key;
encrypting the first-key base information into encryption-resultant first-key base information in response to the second-key signal;
generating second-key-related information from the second-key base information and additional information according to a predetermined function; and
transmitting the encryption-resultant contents information, the encryption-resultant first-key base information, and the second-key-related information.

8. A method of recording contents information, comprising the steps of:
generating a first-key signal representative of a first key from first-key base information being a base of the first key;
encrypting contents information into encryption-resultant contents information in response to the first-key signal;
generating a second-key signal representative of a second key from second-key base information being a base of the second key;
encrypting the first-key base information into encryption-resultant first-key base information in response to the second-key signal;
generating second-key-related information from the second-key base information and additional information according to a predetermined function; and
recording the encryption-resultant contents information, the encryption-resultant first-key base information, and the second-key-related information.

9. An apparatus for transmitting contents information, comprising:
means for generating a first-key signal representative of a first key from first-key base information being a base of the first key;
means for encrypting contents information into encryption-resultant contents information in response to the first-key signal;
means for generating a second-key signal representative of a second key from second-key base information being a base of the second key;
means for encrypting the first-key base information into encryption-resultant first-key base information in response to the second-key signal;
means for generating second-key-related information from the second-key base information and additional information according to a predetermined function; and
means for transmitting the encryption-resultant contents information, the encryption-resultant first-key base information, and the second-key-related information.

10. An apparatus for recording contents information, comprising:
means for generating a first-key signal representative of a first key from first-key base information being a base of the first key;
means for encrypting contents information into encryption-resultant contents information in response to the first-key signal;
means for generating a second-key signal representative of a second key from second-key base information being a base of the second key;
means for encrypting the first-key base information into encryption-resultant first-key base information in response to the second-key signal;
means for generating second-key-related information from the second-key base information and additional information according to a predetermined function; and
means for recording the encryption-resultant contents information, the encryption-resultant first-key base information, and the second-key-related information.

11. A transmission medium for transmitting encryption-resultant contents information, encryption-resultant first-key base information, and second-key-related information which are generated by the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting the first-key base information into encryption-resultant first-key base information in response to the second-key signal; and generating second-key-related information from the second-key base information and additional information according to a predetermined function.

12. A recording medium loaded with encryption-resultant contents information, encryption-resultant first-key base information, and second-key-related information which are generated by the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting the first-key base information into encryption-resultant first-key base information in response to the second-key signal; and generating second-key-related information from the second-key base information and additional information according to a predetermined function.

13. A method as recited in claim 7, wherein the additional information contains at least one of 1) an information piece about a region or regions corresponding to one or more countries, one or more zones, or one or more spaces, 2) an information piece about identification of an individual, 3) an information piece about identification of a group of persons, 4) an information piece about a rating, 5) an information piece about identification of an apparatus maker or a device maker, 6) an information piece about identification of a contents provider, 7) an information piece about time, 8) an information piece about contents authors, 9) an information piece about identification of a reproducing apparatus or a reproducing device, 10) an information piece about identification of a connection apparatus or a connection device, 11) an information piece about identification of a medium on which contents information is recorded, 12) an information piece about identification of contents information, and 13) an information piece about accounting.

14. A method of transmitting contents information, comprising the steps of:
generating a first-key signal representative of a first key from first-key base information being a base of the first key;
encrypting contents information into encryption-resultant contents information in response to the first-key signal;
generating a second-key signal representative of a second key from second-key base information being a base of the second key;
encrypting a part of the first-key base information in response to the second-key signal to convert the first-key base information into encryption-resultant first-key base information;
generating second-key-related information from the second-key base information and additional information according to a predetermined function; and
transmitting the encryption-resultant contents information, the encryption-resultant first-key base information, and the second-key-related information.

15. A method of recording contents information, comprising the steps of:
generating a first-key signal representative of a first key from first-key base information being a base of the first key;
encrypting contents information into encryption-resultant contents information in response to the first-key signal;
generating a second-key signal representative of a second key from second-key base information being a base of the second key;
encrypting a part of the first-key base information in response to the second-key signal to convert the first-key base information into encryption-resultant first-key base information;
generating second-key-related information from the second-key base information and additional information according to a predetermined function; and
recording the encryption-resultant contents information, the encryption-resultant first-key base information, and the second-key-related information.

16. An apparatus for transmitting contents information, comprising:
means for generating a first-key signal representative of a first key from first-key base information being a base of the first key;
means for encrypting contents information into encryption-resultant contents information in response to the first-key signal;
means for generating a second-key signal representative of a second key from second-key base information being a base of the second key;
means for encrypting a part of the first-key base information in response to the second-key signal to convert the first-key base information into encryption-resultant first-key base information;
means for generating second-key-related information from the second-key base information and additional information according to a predetermined function; and
means for transmitting the encryption-resultant contents information, the encryption-resultant first-key base information, and the second-key-related information.

17. An apparatus for recording contents information, comprising:
means for generating a first-key signal representative of a first key from first-key base information being a base of the first key;
means for encrypting contents information into encryption-resultant contents information in response to the first-key signal;
means for generating a second-key signal representative of a second key from second-key base information being a base of the second key;
means for encrypting a part of the first-key base information in response to the second-key signal to convert the first-key base information into encryption-resultant first-key base information;
means for generating second-key-related information from the second-key base information and additional information according to a predetermined function; and
means for recording the encryption-resultant contents information, the encryption-resultant first-key base information, and the second-key-related information.

18. A transmission medium for transmitting encryption-resultant contents information, encryption-resultant first-key base information, and second-key-related information which are generated by the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting a part of the first-key base information in response to the second-key signal to convert the first-key base information into encryption-resultant first-key base information; and generating second-key-related information from the second-key base information and additional information according to a predetermined function.

19. A recording medium loaded with encryption-resultant contents information, encryption-resultant first-key base information, and second-key-related information which are generated by the steps of generating a first-key signal representative of a first key from first-key base information being a base of the first key; encrypting contents information into encryption-resultant contents information in response to the first-key signal; generating a second-key signal representative of a second key from second-key base information being a base of the second key; encrypting a part of the first-key base information in response to the second-key signal to convert the first-key base information into encryption-resultant first-key base information; and generating second-key-related information from the second-key base information and additional information according to a predetermined function.

20. A method as recited in claim 14, wherein the additional information contains at least one of 1) an information piece about a region or regions corresponding to one or more countries, one or more zones, or one or more spaces, 2) an information piece about identification of an individual, 3) an information piece about identification of a group of persons, 4) an information piece about a rating, 5) an information piece about identification of an apparatus maker or a device maker, 6) an information piece about identification of a contents provider, 7) an information piece about time, 8) an information piece about contents authors, 9) an information piece about identification of a reproducing apparatus or a reproducing device, 10) an information piece about identification of a connection apparatus or a connection device, 11) an information piece about identification of a medium on which contents information is recorded, 12) an information piece about identification of contents information, and 13) an information piece about accounting.
